# EUROPEAN PATENT SPECIFICATION

(11) **EP 3 109 764 B1**
(45) Date of publication and mention of the grant of the patent: **14.03.2018**
(21) Application number: 15001857.0
(22) Date of filing: 23.06.2015
(51) Int. Cl.: G06F 3/06, G06F 12/02, G06F 17/30

(54) **FLASH FILE SYSTEM**
FLASH-DATEISYSTEM
SYSTÈME DE FICHIER FLASH

(43) Date of publication of application: 28.12.2016
(73) Proprietor: Zaklady Urzadzen Komputerowych "ELZAB" S.A., 41-813 Zabrze (PL)
(72) Inventor: Pietryga, Marcin, 41-922 Radzionków (PL); Swiderski, Michal, 44-100 Gliwice (PL); Wojdyla, Tomasz, 44-100 Gliwice (PL)
(74) Representative: Lukaszyk, Szymon

(56) References cited:
- US-A- 4 945 475
- US-B1- 6 662 287

## Description

The invention relates to an electronic device, in particular an electronic cash register, including a flash memory comprising a plurality of erasable memory sectors of predefined size and a log-structured file system for writing and for reading a plurality of continuous data files to and from data sectors of the file system, wherein the total volume of said data sectors is substantially smaller than the total volume of said memory sectors. The invention also relates to an article of manufacture comprising a computer-readable storage medium having instructions stored thereon to cause a processor to perform operations including initializing a flash memory with such a log-structured file system.

### State of art

Various file systems using various data structures are known from the state of art.

Publication US4945475 for example discloses a hierarchical filing system providing a cataloguing of data stored in various locations within a memory device. The complete cataloguing structure is organized in the leaf nodes of a B-tree data structure and distributed in an ascending order of the key values to provide a systematic search for a given key. Each file is capable of storing a predetermined number of location description information when data is segmented into non-contiguous segments in memory. A file extents record is used to maintain record of the further segmentation. File location information is kept in the form of file extents descriptors in the leaf nodes of the separate File Extents B-tree. This extents information is sorted in an ascending order based on a key comprised of a unique file number of a file relative starting block location of the file extent.

Publication US6662287 discloses a memory manager for managing allocation of addresses in the memory, structured as a hierarchical tree having a top vertex, a bottom level and at least one intermediate level. The bottom level contains a plurality of bottom vertices each containing a plurality of representations of a Free or Taken status of respective addresses in the memory. Each intermediate contains at least one hierarchy vertex containing a plurality of labels such that each label is associated with a child vertex and defines whether or not a path that includes the respective child vertex ends in a respective bottom level vertex containing at least one Free representation. An allocation command changes the representation of the first Free address to Taken and a free command changes the representation of a specified address to Free. The labels in hierarchical vertices are changed to reflect the path conditions to the bottom vertices. Publications WO9402898 or US5930827 also disclose using hierarchical tree data structures with 0/1 flags to store information about availability of free memory blocks.

It is also known to limit the logical capacity of the file system with respect to the physical capacity of the flash memory; a mechanism known as over-provisioning. The additional space from over-provisioning helps lower the write amplification when the controller writes to the flash memory.

Nonetheless there is still a need to provide an improved flash file system.

### Summary of the invention

It has been an object of the present invention to provide a flash file system enabling for fast, uninterrupted memory operation in computer devices such as computer cash registers that would substantially shorten the time of file write operations.

The invention provides an electronic device, in particular an electronic cash register, as mentioned in the outset, wherein said file system is provided with a dynamic B-tree data structure stored in said memory sectors, said B-tree data structure mapping logical addresses of the data sectors of the file system to the addresses of the memory sectors of the flash memory; a dynamic hierarchical tree (a C-tree) data structure stored in said memory sectors, said C-tree data structure storing hierarchical, Boolean flags denoting availability of the subsequent flash memory sections, wherein the nodes of said C-tree data structure store Boolean flags denoting availability of a predefined number of consecutive sections of the flash memory and corresponding addresses of the lower level nodes assigned to particular sections of the flash memory. Said C-tree data structure lowest level nodes store Boolean flags denoting availability of a predefined number of consecutive memory sectors of the flash memory belonging to appropriate memory section of the upper level node and Boolean flags denoting availability of a predefined number of consecutive groups of memory sectors of the flash memory; files are written to subsequent data sectors of the file system; and said file system is further provided with a data (a C-tree-change) record to store the values of the Boolean flags of the appropriate nodes of said C-tree data structure after each operation of writing of a file to data sectors of the file system.

Thanks to that the file system of the present invention, as a whole is a persistent data structure that always preserves the previous version of itself when it is modified. Such an immutability feature is of ultimate importance in industrial applications such as fiscal cash registers. Data structures of the file system in a way "crawl" over the memory sectors of the card, so that a sudden, abrupt reset of the electronic device will not destroy data integrity.

Since files are written solely "forward" to subsequent data sectors, the flash file system of the present invention enables for elimination of random, lasting even a few hundreds of milliseconds freezing of an electronic device during operations of writing a file to a number of non-contiguous memory sectors that occur in many prior art flash file systems and which relate to overloading of an internal memory buffer of the flash memory card.

Moreover it is not required in the file system of the present invention to use any kind of a garbage collection memory management. Memory is simply managed by the C-tree data structure and the C-tree-change data record.

Preferably the ratio of the total volume of said data sectors to the total volume of said memory sectors amounts up to 20%.

Preferably said predefined number of consecutive groups of memory sectors of the flash memory stored in the lowest level nodes of said C-tree data structure is adjusted to correspond to an average file size to be stored in said file system.

Preferably said B-tree data structure has three levels, while preferably said C-tree data structure has three levels.

Preferably said flash memory is a NAND type Secure Digital nonvolatile memory card.

### Brief description of figures

The invention shall be described below in an exemplary embodiment and with reference to the attached drawings on which:
Fig. 1 schematically illustrating an electronic device of the present invention in a form of a cash register;
Fig. 2 is a block diagram schematically illustrating functional elements of an electronic device of the present invention;
Fig. 3 illustrates the logical structure of the file system of the present invention;
Fig. 4 illustrates an embodiment of the B-tree structure of the file system of the present invention;
Fig. 5 illustrates an embodiment of the C-tree structure of the file system of the present invention;
Fig. 6 shows the results of simulations of the file system of the present invention for a number of over-provisioning coefficients.

### Brief description of preferred embodiments

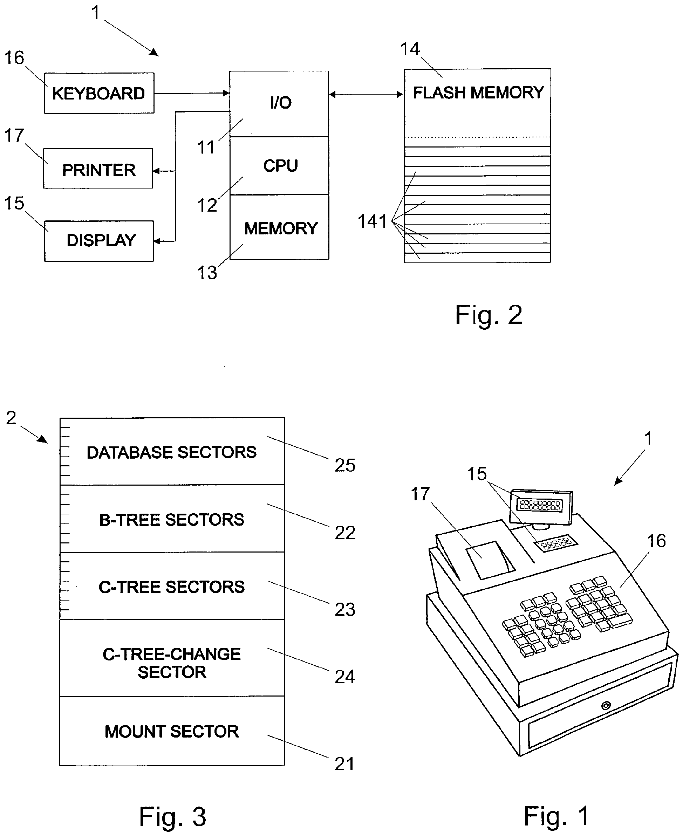

As shown in Fig. 1 and Fig. 2 an electronic device 1 of the present invention, such as the cash register, comprises components typically found in the most general purpose computers, such as an input/output (I/O) circuit 11, used to communicate information in appropriately structured form to and from other parts of the device 1, a central processing unit (CPU) 12 coupled to the I/O circuit 11 and a non-volatile memory 13 storing computer programs, routines, etc. which may be accessed and executed by the CPU 12.

A flash memory 14 such as Secure Digital (SD) nonvolatile memory card is coupled to the I/O circuit 11 to store and retrieve files according to a file system of the present invention. The flash memory 14 SD card comprises a plurality of erasable memory sectors 141 and is designed to be removed and used in a different device for example in order to read the data on files it stores.

A display 15 such as monitor or liquid-crystal display (LCD) is coupled to the I/O circuit 11 and is used to display information generated by the CPU 12. A keyboard 16 also coupled to the I/O circuit 11 is used to input data and commands into the device as is well known. Obviously in case the device 1 is a cash register a printer 17 is used to print sales slip or reports. The hardware elements shown in Fig. 1 and Fig. 2 represent a broad category of computer components and it as shall be obvious to those skilled in the art that various additional components may be coupled to the electronic device 1 such as networks interfaces coupling the device to other electronic devices, additional displays, input devices such as touch-screens, etc.

As shown in Fig. 3 the file system 2 according to an embodiment of the present invention used to control how data is stored and retrieved from flash memory 14 includes various logical sectors: a single mount sector 21, a number of B-tree sectors 22, a number of C-tree sectors 23, a single C-tree-change sector 24 and a number of data sectors 25 to store the content of particular files, wherein obviously the content of a single file usually occupies a number of non-contiguous data sectors 25.

In a described embodiment of the present invention the volume of each data sector 25, as well as the volume of each memory sector 141 amounts 512 B (512 bytes), the volume of the flash memory 14 amounts 4 GB (4 gigabytes). The assumed maximum volume of data sectors 25 amounts 500 MB (500 megabytes). Since the volumes of data 25 and memory 141 sectors are equal, 1 024 000 data sectors 25 are provided by the file system, while 8 388 608 memory sectors 141 are provided by the flash memory, so the over-provisioning coefficient amounts 12.21%.

The mount sector 21 stores the addresses of the sectors storing the root node of the B-tree logical structure, the root node of the C-tree logical structure, as well as the address of the C-tree-change sector 24. Therefore the mount sector 21 enables for booting up the electronic device 1, as well as using the flash memory 14 SD card in an entirely different electronic device.

Dynamic B-tree structure 22 used in the file system of the present invention is a well-known tree data structure that keeps data sorted and allows searches, sequential access, insertions, and deletions in logarithmic time. In the context of the present invention the B-tree structure maps data sectors 25 to particular addresses of factual memory sectors of the flash memory 14 and stores information about their allocation.

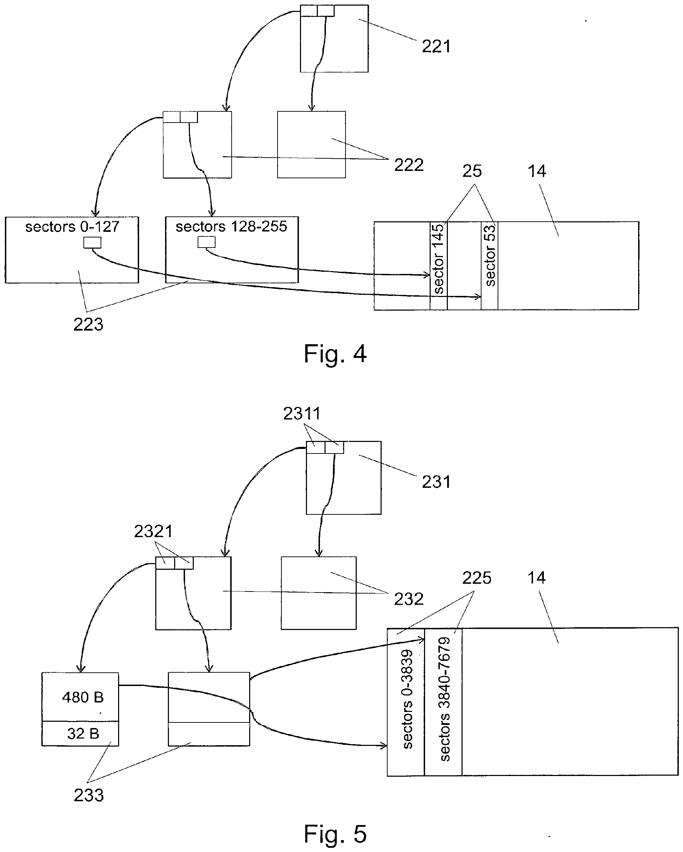

An embodiment of the B-tree shown in Fig. 4 has three levels, wherein the node 221 of the first level (the root node) and the nodes 222 of the second level store addresses of the sectors containing lower nodes of the B-tree structure, while the nodes 223 of the third level store addresses of data sectors 25.

In an embodiment of the present invention each sector size B-tree node stores up to 128 elements, 4 B each, which in a case of three B-tree levels (and a 512 B sector size) enables for addressing and accessing 128*128*128*512 B = 1 GB size memory, which obviously exceeds the assumed maximum volume of data sectors 25 (in this embodiment 500 MB).

Dynamic hierarchical tree structure used in the file system of the present invention (labelled as "C-tree") stores binary or boolean data about availability of the subsequent flash memory sections or parts (1 = used, 0 = not used) and is used to write and store new data on the flash memory, as well to modify an existing data.

An embodiment of the C-tree shown in Fig. 5 has three levels, wherein the node 231 of the first level (the root node) stores an information about availability of a predefined number of equal and consecutive sections of the flash memory 14, each node 232 of the second level stores an information about availability of a predefined number of equal and consecutive sections belonging to the appropriate section of the root node.

In this embodiment said predefined number of equal and consecutive memory sections stored in 512 B nodes 231, 232 of the first and the second C-tree levels amounts 128. Therefore each subsection 2311, 2321 of the nodes 231 and 232 amounts 512 B/128 = 4 B = 32 bits, wherein 30 least significant bits denote an address of the flash memory sector containing appropriate lower level C-tree node, while 2 most significant bits are used as a 0/1 flag informing about availability of appropriate flash memory section referred to by this node.

The structure of the 512 B nodes 233 of the third C-tree level is different. The first 480 B = 3840 bits of each third level node 233 are used as a 0/1 flags informing about availability of consecutive flash memory sectors belonging to the appropriate section of the second level C-tree node 232 (0-3839, 3840-7679, 7680-11519, etc. for the first node 232). Therefore in a case of three C-tree levels and a 512 B sector size the C-tree enables for addressing 128*128*480*8*512 B=30 GB size memory which obviously exceeds the volume of the flash memory 14 (in this embodiment 4 GB).

The next 30 B of each C-tree third level node 233 are used as a 0/1 flags informing about availability of consecutive 240 groups of sectors (30 B = 240 bits), each group (labelled as "hole_size") containing 16 sectors (240 * 16 = 3840). Such a separation enables for yet a faster determination of flash memory availability since not only particular sectors are concerned but also larger groups of consecutive sectors.

In this embodiment the hole_size volume amounts therefore 8 kB or 8192 bytes (16*512 B), which corresponds to the average amount of memory requested to store a particular sale operation within the file system 2. Other embodiments may obviously require different hole_size volume and other number of C-tree levels.

While the modified C-tree 23 nodes 231, 232 and 233 are written to the flash memory 14 obviously also availability flags may change their values since the nodes themselves occupy memory sectors 141 of the card. That in turn would lead to recursion problems, as these flag changes need to be taken into account in C-tree 23 nodes. In order to avoid this drawback C-tree 23 nodes are written in the last step of a file write operation and the changes of the flags they contain are stored in a separate data (labelled as "C-tree-change") record stored in sector 24. During the first step of a subsequent file write operation changes of the flags of the C-tree 23 nodes 231, 232 and 233 stored in the C-tree-change sector 24 shall be propagated within the C-tree logical structure. Thanks to that the file system 2 is a persistent data structure that always preserves the previous version of itself when modified.

File read operation from the card 14 is performed in a known manner disclosed e.g. in US 4945475, so that only the B-tree structure 22 of the file system 2 is necessary. In the first step the file descriptor or file handle is looked up in the B-tree structure, in the following step the B-tree is used to find addresses of the sectors of the card in which this file is stored, the information is read from these sectors and merged forming the content of the file.

To perform file write operation all data structures described above are required. In the first step changes of the flags of the C-tree 23 nodes 231, 232 and 233 stored in the C-tree-change sector 24 are propagated, as described above. In the next step a new data sector representing the file handle is allocated within the B-tree structure 22 or, in a case of modifying the content of an existing file, an existing file handle is located. In the following step it is determined from the information stored in the C-tree structure 22 which data sectors 25 are available to perform the requested writing of the file of the specified size. In the last step the file is written to these data sectors 25 and the nodes of the C-tree structure 22 that were modified in the process are stored in the C-tree-change sector 24.

Since the above procedure may request a number of access/write operations (3 levels of the B-tree, 3 levels of the C-tree, writing a file itself, writing the C-tree-change sector) it may be preferably performed for a number of files preliminary stored in a non-volatile memory 13 of the electronic device 1.

In a file system of the present invention data is written in subsequent free sectors 141 of the flash memory 14 (forward) in a cyclic manner, that is after the whole memory 14 has been passed through and its end is reached, data is written again from the start in a subsequent pass.

Before writing data the file system of the present invention searches for continuous memory sections of a predefined hole_size amount, which in an embodiment shown in Fig. 5 amounts 16 sectors.

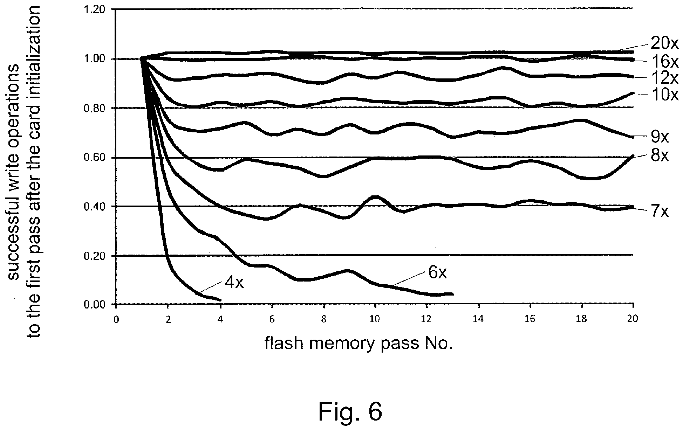

The file system of the present invention has been tested for a number of over-provisioning coefficients. The results of these simulations are shown in Fig. 6. Symbols 4x, 6x,..., 20x assigned to particular curves denote the over-provisioning coefficient, so that for example the 2x curve denote the results for the flash memory having the physical capacity twice as large as the assumed total capacity of the available data sectors 25. It has been also assumed that the hole_size of the third level C-tree 23 nodes 233 amounted 16 sectors, as explained with reference to Fig. 5.

Horizontal axis represents the number of subsequent passes through the flash memory, while vertical axis represents the ratio of the number of successful write operations during subsequent passes to the first pass through the card after its initialization.

The simulations showed that at least six fold over-provisioning coefficient (6x curve) that is 16.67% enabled for an uninterrupted write operations to the flash memory during numerous cycles.
While a preferred embodiment of the present invention has been shown and described, it will be apparent to those skilled in the art that many changes and modifications may be made without departing from the invention in its broader aspects.
Another embodiment of the file system of the present invention may be provided with a write memory buffer e.g. of a volume equal to a predefined number of sectors that shall be written (flushed) to the flash memory for example if the buffer is full or some stage of a write operation has terminated.
In yet another embodiment of the file system of the present invention, it may be provided with a node memory buffer to cache the nodes of the B-tree 22 and C-tree 23 data structures. Such a buffer enables for shortening the time of memory read operations even by 50% and memory write operations even by 20%, since to write a file, traversing the C-tree 23 data structure is no longer required.
The appended claims are therefore intended to cover all such changes and modifications as falling within the scope of the invention.

## Claims

1. An electronic device (1), in particular an electronic cash register, including a flash memory (14) comprising a plurality of erasable memory sectors (141) of predefined size and a log-structured file system (2) for writing and for reading a plurality of continuous data files to and from data sectors (25) of the file system (2), wherein the total volume of said data sectors (25) is substantially smaller than the total volume of said memory sectors (141), said file system (2) provided with
a dynamic B-tree data structure (22) stored in said memory sectors (141), said B-tree data structure (22) mapping logical addresses of the data sectors (25) of the file system (2) to the addresses of the memory sectors (141) of the flash memory (14);
a dynamic hierarchical tree, being a C-Tree data structure (23) stored in said memory sectors (141), said C-tree data structure (23) storing hierarchical, Boolean flags denoting availability of subsequent flash memory sections, wherein the nodes (231) of said C-tree data structure (23) store Boolean flags denoting availability of a predefined number of consecutive sections of the flash memory (14) and corresponding addresses of the lower level nodes (232) assigned to particular sections of the flash memory (14),
**characterized in that**,
said C-tree data structure (23) lowest level nodes (233) store Boolean flags denoting availability of a predefined number of consecutive memory sectors (141) of the flash memory (14) belonging to appropriate memory section of the upper level node (232) and Boolean flags denoting availability of a predefined number of consecutive groups of memory sectors (141) of the flash memory (14);
files are written to subsequent data sectors (25) of the file system (2);
and said file system (2) is further provided with a data C-Tree change record (24) to store the values of the Boolean flags of the appropriate nodes (231, 232 and 233) of said C-tree data structure (23) after each operation of writing of a file to data sectors (25) of the file system (2).

2. The electronic device according to Claim 1, **characterized in that**, the ratio of the total volume of said data sectors to the total volume of said memory sectors amounts up to 20%.

3. The electronic device according to Claim 1 or 2, **characterized in that**, said predefined number of consecutive groups of memory sectors (141) of the flash memory (14) stored in the lowest level nodes (233) of said C-tree data structure (23) is adjusted to correspond to an average file size to be stored in said file system (2).

4. The electronic device according to any of Claims 1 to 3, **characterized in that**, said B-tree data structure (22) has three levels.

5. The electronic device according to any of Claims 1 to 4, **characterized in that**, said C-tree data structure (23) has three levels.

6. The electronic device according to any of Claims 1 to 5, **characterized in that**, the flash memory (14) is a NAND type Secure Digital (SD) nonvolatile memory card.

7. An article of manufacture comprising a computer-readable storage medium having instructions stored thereon to cause a processor, when said instructions are run on this processor, to perform operations including initializing a flash memory (14) comprising a plurality of erasable memory sectors (141) of predefined size with a log-structured file system (2) for writing and for reading a plurality of continuous data files to and from data sectors (25) of the file system (2), wherein the total volume of said data sectors (25) is substantially smaller than the total volume of said memory sectors (141), said file system (2) provided with
a dynamic B-tree data structure (22) stored in said memory sectors (141), said B-tree data structure (22) mapping logical addresses of the data sectors (25) of the file system (2) to the addresses of the memory sectors (141) of the flash memory (14);
a dynamic hierarchical tree C-tree data structure (23) stored in said memory sectors (141), said C-tree data structure (23) storing hierarchical, Boolean flags denoting availability of subsequent flash memory sections, wherein the nodes (231) of said C-tree data structure (23) store Boolean flags denoting availability of a predefined number of consecutive sections of the flash memory (14) and corresponding addresses of the lower level nodes (232) assigned to particular sections of the flash memory (14),
**characterized in that**,
said C-tree data structure (23) lowest level nodes (233) store Boolean flags denoting availability of a predefined number of consecutive memory sectors (141) of the flash memory (14) belonging to appropriate memory section of the upper level node (232) and Boolean flags denoting availability of a predefined number of consecutive groups of memory sectors (141) of the flash memory (14);
files are written to subsequent data sectors (25) of the file system (2);
and said file system (2) is further provided with a data C-tree change record (24) to store the values of the Boolean flags of the appropriate nodes (231, 232 and 233) of said C-tree data structure (23) after each operation of writing of a file to data sectors (25) of the file system (2).

## Patentansprüche

1. Ein elektronisches Gerät (1), insbesondere eine elektronische Registrierkasse, einschließlich eines Flash-Speichers (14), bestehend aus einer Vielzahl von löschbaren Speichersektoren (141) von vordefinierter Größe mit einem logarithmisch strukturierten Dateisystem (2) zum Schreiben und Lesen einer Vielzahl von kontinuierlichen Datendateien in und von den Datensektoren (25) des Dateisystems (2), wobei das Gesamtvolumen der genannten Datensektoren (25) wesentlich kleiner als das Gesamtvolumen der genannten Speichersektoren (141) ist, das genannte Dateisystem (2) ist versehen mit einer dynamischen B-Baum-Datenstruktur (22), die in den genannten Speichersektoren (141) gespeichert ist, wobei die genannte B-Baum-Datenstruktur (22) logische Adressen der Datensektoren (25) des Dateisystems (2)zu den Adressen der Speichersektoren (141) des Flash-Speichers (14) abbildet;
ein dynamischer, hierarchischer Baum, der eine C-Baum-Datenstruktur (23) ist, die in den genannten Speichersektoren (141) gespeichert ist, die genannte C-Baum-Datenstruktur (23) speichert hierarchische, boolesche Flags, die die Verfügbarkeit von nachfolgenden Flash-Speicherabschnitten bezeichnen, wobei die Knoten (231) der genannten
C-Baum-Datenstruktur (23) boolesche Flags speichern, die die Verfügbarkeit einer vordefinierten Anzahl von aufeinanderfolgenden Abschnitten des Flash-Speichers (14) und der entsprechenden Adressen der Knoten der unteren Ebene (232) bezeichnen, die bestimmten Abschnitten des Flash-Speichers (14) zugewiesen sind,
**dadurch gekennzeichnet, dass**
die genannte C-Baum-Datenstruktur (23) Knoten der untersten Ebene (233) die boolesche Flags speichern, die die Verfügbarkeit einer vordefinierten Anzahl von aufeinanderfolgenden Speichersektoren (141) des Flash-Speichers (14) bezeichnen, die zu einem geeigneten Speicherabschnitt des Knotens der oberen Ebene (232) gehören und boolesche Flags, die die Verfügbarkeit einer vordefinierten Anzahl von aufeinanderfolgenden Gruppen von Speichersektoren (141) des Flash-Speichers (14) bezeichnen;
die Dateien werden in die nachfolgenden Datensektoren (25) des Dateisystems (2) geschrieben;
und das genannte Dateisystem (2) ist ferner mit einem C-Baum-Änderungsdatensatz (24) versehen, um die Werte der booleschen Flags der entsprechenden Knoten (231, 232 und 233) der genannten C-Baum-Datenstruktur (23) nach jeder Schreiboperation einer Datei in Datensektoren (25) des Dateisystems (2) zu speichern.

2. Das elektronische Gerät gemäß dem Anspruch 1, **dadurch gekennzeichnet, dass** das Verhältnis des Gesamtvolumens der genannten Datensektoren zu dem Gesamtvolumen der Speichersektoren bis zu 20% beträgt.

3. Das elektronische Gerät gemäß dem Anspruch 1 oder 2, **dadurch gekennzeichnet, dass** die genannte vordefinierte Anzahl von aufeinanderfolgenden Gruppen von Speichersektoren (141) des Flash-Speichers (14) in den Knoten der untersten Ebene (233), gespeichert in der genannten C-Baum-Datenstruktur (23), ist so angepasst, um der durchschnittlichen Dateigröße zu entsprechen, die in dem genannten Dateisystem (2) zu speichern ist.

4. Das elektronische Gerät gemäß einem der Ansprüche 1 bis 3, **dadurch gekennzeichnet, dass** die B-Baum-Datenstruktur (22) drei Ebenen aufweist.

5. Das elektronische Gerät gemäß einem der Ansprüche 1 bis 4, **dadurch gekennzeichnet, dass** die C-Baum-Datenstruktur (23) drei Ebenen aufweist.

6. Das elektronische Gerät gemäß einem der Ansprüche 1 bis 5, **dadurch gekennzeichnet, dass** der Flash-Speicher (14) eine nichtflüchtige SD-Speicherkarte vom NAND-Typ ist.

7. Ein Herstellungsartikel, bestehend aus einem computerlesbaren Speichermedium, auf dem Befehle gespeichert werden, um einen Prozessor zu veranlassen, wenn die genannten Befehle auf diesem Prozessor laufen, Operationen auszuführen, einschließlich der Initialisierung eines Flash-Speichers (14), bestehend aus einer Vielzahl von löschbaren Speichersektoren (141) von vordefinierter Größe mit einem logarithmisch strukturierten Dateisystem (2) zum Schreiben und Lesen einer Vielzahl von kontinuierlichen Datendateien in und von den Datensektoren (25) des Dateisystems (2), wobei das Gesamtvolumen der genannten Datensektoren (25) wesentlich kleiner als das Gesamtvolumen der Speichersektoren (141) ist, das genannte Dateisystem (2) ist versehen mit
einer dynamischen B-Baum-Datenstruktur (22), die in den genannten Speichersektoren (141) gespeichert ist, wobei die genannte B-Baum-Datenstruktur (22) logische Adressen der Datensektoren (25) des Dateisystems (2) zu den Adressen der Speichersektoren (141) des Flash-Speichers (14) abbildet;
ein dynamischer, hierarchischer Baum, C-Baum-Datenstruktur (23), die in den genannten Speichersektoren (141) gespeichert ist, die genannte C-Baum-Datenstruktur (23) speichert hierarchische, boolesche Flags, die die Verfügbarkeit von nachfolgenden Flash-Speicherabschnitten bezeichnen, wobei die Knoten (231) der genannten C-Baum-Datenstruktur (23) boolesche Flags speichern, die die Verfügbarkeit einer vordefinierten Anzahl von aufeinanderfolgenden Abschnitten des Flash-Speichers (14) und der entsprechenden Adressen der Knoten der unteren Ebene (232) bezeichnen, die bestimmten Abschnitten des Flash-Speichers (14) zugewiesen sind,
**dadurch gekennzeichnet, dass**
die genannte C-Baum-Datenstruktur (23) Knoten der untersten Ebene (233) die boolesche Flags speichern, die die Verfügbarkeit einer vordefinierten Anzahl von aufeinanderfolgenden Speichersektoren (141) des Flash-Speichers (14) bezeichnen, die zu einem geeigneten Speicherabschnitt des Knotens der oberen Ebene (232) gehören und boolesche Flags, die die Verfügbarkeit einer vordefinierten Anzahl von aufeinanderfolgenden Gruppen von Speichersektoren (141) des Flash-Speichers (14) bezeichnen;
die Dateien werden in die nachfolgenden Datensektoren (25) des Dateisystems (2) geschrieben; und das genannte Dateisystem (2) ist ferner mit einem C-Baum-Änderungsdatensatz (24) versehen, um die Werte der booleschen Flags der entsprechenden Knoten (231, 232 und 233) der genannten C-Baum-Datenstruktur (23) nach jeder Schreiboperation einer Datei in Datensektoren (25) des Dateisystems (2) zu speichern.

## Revendications

1. Un dispositif électronique (1), en particulier une caisse enregistreuse électronique, comprenant une mémoire flash (14) comprenant une pluralité de secteurs de mémoire effaçables (141) de taille prédéfinie et un système de fichiers logarithmique (2) pour écrire et pour lire une pluralité de fichiers de données continues vers et depuis des secteurs de données (25) du système de fichiers (2), le volume total desdits secteurs de données (25) étant sensiblement inférieur au volume total desdits secteurs de mémoire (141), système de fichiers (2)
fourni avec une structure de données arbre-B dynamique (22) stockée dans lesdits secteurs de mémoire (141), ladite structure de données arbre-B (22) mappant des adresses logiques des secteurs de données (25) du système de fichiers (2) aux adresses du des secteurs de mémoire (141) de la mémoire flash (14);
un arbre hiérarchique dynamique, étant une structure de données arbre-C (23) stockée dans lesdits secteurs de mémoire (141), ladite structure de données arbre-C (23) stockant des drapeaux booléens hiérarchiques indiquant la disponibilité des sections de mémoire flash suivantes, dans lesquelles les noeuds (231) de ladite structure de données arbre-C (23) stockent des drapeaux booléens indiquant la disponibilité d'un nombre prédéfini de sections consécutives de la mémoire flash (14) et des adresses correspondantes des noeuds de niveau inférieur (232) affectés à des sections particulières de la mémoire flash (14),
**caractérisé en ce que**,
ladite structure de données arbre-C (23) des noeuds de niveau inférieur (233) stockent des drapeaux booléens indiquant la disponibilité d'un nombre prédéfini de secteurs de mémoire consécutifs (141) de la mémoire flash (14) appartenant à la section de mémoire appropriée du noeud de niveau supérieur (232) et des indicateurs booléens indiquant la disponibilité d'un nombre prédéfini de groupes consécutifs de secteurs de mémoire (141) de la mémoire flash (14);
les fichiers sont écrits dans les secteurs de données suivants (25) du système de fichiers (2);
et ledit système de fichiers (2) est en outre fourni avec un enregistrement de changement de données arbre-C (24) pour stocker les valeurs des drapeaux booléens des noeuds appropriés (231, 232 et 233) de ladite structure de données arbre-C (23) après chaque opération d'écriture d'un fichier sur des secteurs de données (25) du système de fichiers (2).

2. Le dispositif électronique selon la revendication 1, **caractérisé en ce que** le rapport entre le volume total desdits secteurs de données et le volume total desdits secteurs de mémoire s'élève jusqu'à 20%.

3. Le dispositif électronique selon la revendication 1 ou 2, **caractérisé en ce que** ledit nombre prédéfini de groupes consécutifs de secteurs de mémoire (141) de la mémoire flash (14) stockés dans les noeuds de niveau inférieur (233) de ladite structure de données d'arbre C (23) est ajustée pour correspondre à une taille de fichier moyenne à stocker dans ledit système de fichiers (2).

4. Le dispositif électronique selon l'une quelconque des revendications 1 à 3, **caractérisé en ce que** ladite structure de données arbre-B (22) comporte trois niveaux.

5. Le dispositif électronique selon l'une quelconque des revendications 1 à 4, **caractérisé en ce que** ladite structure de données arbre-C (23) comporte trois niveaux.

6. Le dispositif électronique selon l'une quelconque des revendications 1 à 5, **caractérisé en ce que** la mémoire flash (14) est une carte mémoire non volatile de type NAND Secure Digital (SD).

7. Un article de fabrication comprenant un support de stockage lisible par ordinateur sur lequel sont stockées des instructions pour faire exécuter par un processeur, lorsque les instructions sont exécutées sur ce processeur, des opérations comprenant l'initialisation d'une mémoire flash (14) comprenant une pluralité de secteurs de mémoire effaçables (141) de taille prédéfinie avec un système de fichiers à structure logarithmique (2) pour écrire et lire une pluralité de fichiers de données continues vers et à partir de secteurs de données (25) du système de fichiers (2), le volume total desdits secteurs de données (25) est sensiblement plus petit que le volume total desdits secteurs de mémoire (141), ledit système de fichiers (2) comportant
une structure de données d'arbre-B dynamique (22) stockée dans lesdits secteurs de mémoire (141), ladite structure de données arbre-B (22) mappe des adresses logiques des secteurs de données (25) du système de fichiers (2) aux adresses des secteurs de mémoire (141) de la mémoire flash (14);
une structure de données hiérarchique dynamique arbre-C (23) stockée dans lesdits secteurs de mémoire (141), ladite structure de données arbre-C (23) stockant des drapeaux booléens hiérarchiques indiquant la disponibilité des sections de mémoire flash suivantes, dans laquelle les noeuds (231) de ladite structure de données arbre-C (23) stocke des drapeaux booléens indiquant la disponibilité d'un nombre prédéfini de sections consécutives de la mémoire flash (14) et des adresses correspondantes des noeuds de niveau inférieur (232) affectés à des sections particulières de la mémoire flash (14),
**caractérisé en ce que**,
ladite structure de données arbre-C (23) des noeuds de niveau inférieur (233) stockent des drapeaux booléens indiquant la disponibilité d'un nombre prédéfini de secteurs de mémoire consécutifs (141) de la mémoire flash (14) appartenant à la section de mémoire appropriée du noeud de niveau supérieur (232) et des indicateurs booléens indiquant la disponibilité d'un nombre prédéfini de groupes consécutifs de secteurs de mémoire (141) de la mémoire flash (14);
les fichiers sont écrits dans les secteurs de données suivants (25) du système de fichiers (2); et ledit système de fichiers (2) est en outre fourni avec un enregistrement de changement de données arbre-C (24) pour stocker les valeurs des drapeaux booléens des noeuds appropriés (231, 232 et 233) de ladite structure de données arbre-C (23) après chaque opération d'écriture d'un fichier sur des secteurs de données (25) du système de fichiers (2).
